(19) Europäisches Patentamt

European Patent Office

Office européen des brevets

(11) **EP 0 714 190 A2**

## (12) EUROPÄISCHE PATENTANMELDUNG

(43) Veröffentlichungstag:
29.05.1996 Patentblatt 1996/22

(51) Int. Cl.$^6$: **H04L 7/033**, H04L 25/49

(21) Anmeldenummer: 95117863.1

(22) Anmeldetag: 13.11.1995

(84) Benannte Vertragsstaaten:
AT CH DE GB IT LI NL

(30) Priorität: 25.11.1994 DE 4442066

(71) Anmelder: SIEMENS AKTIENGESELLSCHAFT
D-80333 München (DE)

(72) Erfinder:
• Gernegross, Dietmar, Dipl.-Ing. (FH)
D-82041 Oberhaching (DE)
• Thalhamer, Helmut, Dipl.-Ing. (FH)
D-82256 Fürstenfeldbruck (DE)

(54) **Schaltungsanordnung zur Rückgewinnung des Taktes aus einem CMI-codierten Signal**

(57) Eine solche Anordnung soll in einfacher Weise in digitaler Integration realisierbar sein und eine optimale Lage der Abtastphase des rückgewonnenen Taktes ohne Abgleich und temperatur- und coderegelfehlerabhängig gewährleisten. Die Erfindung sieht hierzu einen CMI-Decodierer mit Coderegelüberwachung und eine Phasenregelschleife vor, die aus einem, einen Phasendifferenzbilder und eine Phasenerzeugung enthaltenden Phasendetektor, einem dem Phasendetektor ausgangsseitig angeschalteten Loop-Filter und einem den auf das CMI-Eingangssignal synchronisierten Takt liefernden spannungsgesteuerten Oszillator besteht, dessen Regelspannungseingang mit dem Filterausgang verbunden ist.

FIG 1

EP 0 714 190 A2

## Beschreibung

Die Erfindung bezieht sich auf eine Schaltungsanordnung zur Rückgewinnung des Taktes aus einem CMI-codierten Signal, wie es in den CCITT-Empfehlungen für die gleichstromfreie Übertragung von höheren Bitraten empfohlen wird.

Beim CMI-Code werden die binären Signale in Bitpaare umgesetzt. Der logischen 0 des binären Signals entspricht ein CMI-Bitpaar 01, das als Kombination eines negativen und eines positiven Impulses ausgesendet wird, während die logische 1 des binären Signals abwechselnd als positives oder negatives CMI-Bitpaar übertragen wird. In der DE 36 25 589 C2 ist ein CMI-Decoder beschrieben.

Der Erfindung liegt die Aufgabe zugrunde, eine Taktrückgewinnung und Coderegelüberwachung für einen CMI-Decodierer zu schaffen, die in einfacher Weise in digitaler Integration realisierbar ist und eine optimale Lage der Abtastphase des rückgewonnenen Taktes ohne Abgleich und temperatur- und coderegelfehlerunabhängig gewährleistet.

Diese Aufgabe wird gemäß der Erfindung gelöst durch einen CMI-Decodierer mit Coderegelüberwachung und eine Phasenregelschleife aus einem, einen Phasendifferenzbilder und eine Referenzerzeugung enthaltenden Phasendetektor, einem dem Phasendetektor ausgangsseitig angeschalteten Loop-Filter und einem den auf das CMI-Eingangssignal synchronisierten Takt liefernden spannungsgesteuerten Oszillator VCO, dessen Regelspannungseingang mit dem Filterausgang verbunden ist.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen:

Fig. 1  das Prinzipschaltbild einer Schaltungsanordnung zur Taktrückgewinnung,

Fig. 2  einen Phasendetektor im Blockschaltbild,

Fig. 3  in einem Zeitdiagramm Phasendetektorsignale für den eingerasteten Zustand der Taktrückgewinnungsregelschleife,

Fig. 4  einen Decodierer im Blockschaltbild,

Fig. 5  eine Synchronisiereinrichtung mit nachfolgendem Toggel-Flip-Flop,

Fig. 6  eine Coderegelüberwachung im Blockschaltbild und

Fig. 7, 8  Pulsdiagramme von Signalverläufen innerhalb der Schaltungsanordnung und in einem Beispiel bei einer CMI-Signal-Verletzung.

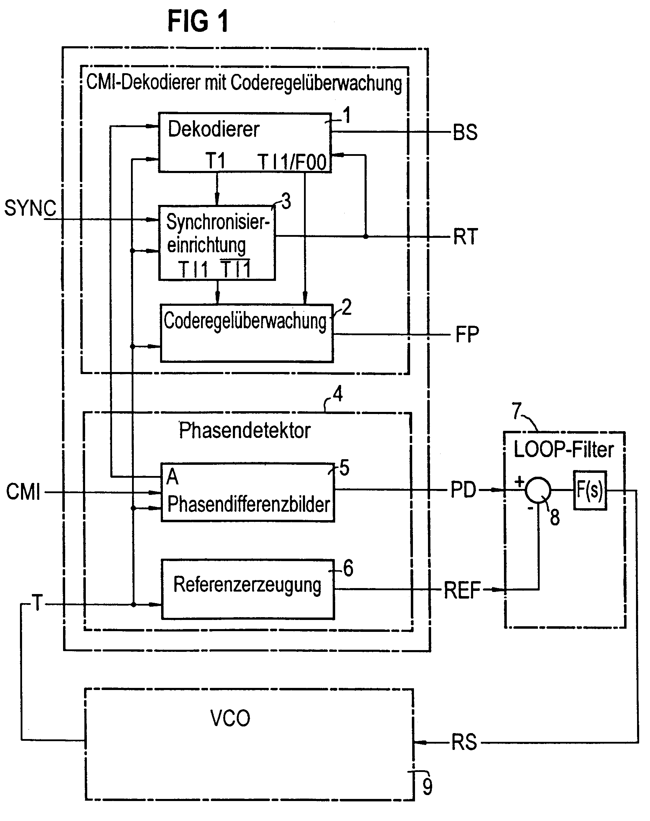

In Figur 1 ist das Prinzipschaltbild einer Schaltungsanordnung, bestehend aus einem CMI-Decodierer 1 mit Coderegelüberwachung 2, einem Phasendetektor 4, einem Loop-Filter 7 und einem spannungsgesteuerten Oszillator VCO 9 dargestellt, bei der der rückgewonnene Takt über eine digitale Regelschleife (PLL) erzeugt wird und dessen Abtaktphase sich automatisch optimal, also ohne Abgleich einstellt. Hierbei werden in vorteilhafterweise außer dem Oszillator und dem Loop-Filter alle Schaltungsteile in einem ASIC integriert.

Mit der Verwendung eines digitalen Phasendetektors aus einem Phasendifferenzbilder 5 und einer Referenzerzeugung 6, der ein Bezugssignal liefert, werden Bausteintoleranzen eliminiert und CMI-Signaleigenschaften (Dauer 0, Dauer 1) berücksichtigt. Ferner ist in der Schaltungsanordnung eine Synchronisiereinrichtung 3 enthalten mit guter Resistenz gegenüber Coderegelverletzungen, ergänzt um die Möglichkeit einer zusätzlichen externen Steuerung (z.B.: durch eine STM 1-Rahmensynchronisierung) zur weiteren Verbesserung der Störsicherheit. Die Realisierung der Coderegelüberwachung 2 erfolgt unter weitgehender Nutzung der im CMI-Decodierer 1 vorhandenen Signale. Die einzelnen Schaltungsteile der Schaltungsanordnung nach Figur 1 werden an späterer Stelle näher beschrieben und hinsichtlich ihrer Funktion erläutert.

Der Abstand der Wechsel in einem CMI-codierten Signal ist nicht gleichmäßig, und damit schwankt die Anzahl der High-Impulse bzw. der Gleichspannungsmittelwert des Signals PD am Ausgang des Phasendifferenzbilders 5 in Abhängigkeit vom Bitmuster. Der dadurch entstehende Wechselspannungsanteil des Signals PD wird über das Loop-Filter 7 auf den Regelspannungseingang des VCO 9 gelangen und damit die Phase des Taktes T, mit dem das CMI-Signal abgetaktet wird, modulieren. Um dies zu verhindern, wird erfindungsgemäß ein Referenzsignal aus dem bereits abgetakteten und damit von der Abtastphase unabhängigen CMI-Signal so abgeleitet, daß es bezüglich der Gleichspannungsmittelwertschwankung in Abhängigkeit vom Bitmuster exakt die gleichen Eigenschaften aufweist wie das Signal PD am Ausgang des Phasendifferenzbilders 5. Durch Differenzbildung mit dem Signal PD im Subtrahierer 8 kann somit der störende Wechselspannungsanteil vollständig eliminiert werden. Auch Imperfektionen der verwendeten Logikbausteine, wie z.B. unterschiedliche Flankensteilheiten für High-Low- und Low-High-Übergänge oder Temperaturdrift werden auf diese Weise kompensiert, so daß die Spannungsdifferenz zwischen dem Signal PD des Phasendifferenzbilders 5 und REF der Referenzerzeugung 6 ausschließlich der Phasenabweichung von der optimalen Abtastphase (kein Offset) entspricht. Mit diesem Verfahren und der Verwendung eines geeigneten Loop-Filters (hohe Gleichspannungsverstärkung) läßt sich eine selbstabgleichende Regelschleife realisieren.

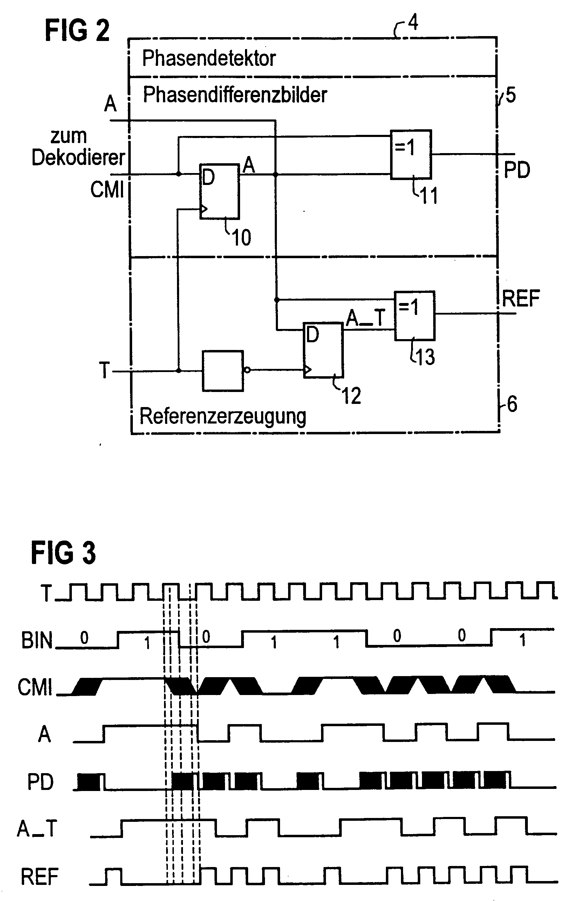

In Figur 2 ist ein Ausführungsbeispiel des aus einem Phasendifferenzbilder 5 und einer Referenzerzeugung 6 bestehenden Phasendetektors 4 dargestellt. Im Phasendifferenzbilder 5 wird das CMI-Signal mit der positiven Taktflanke des vom VCO 9 gelieferten Taktes T von einem D-FF 10 (D-Flip-Flop) übernommen (Signal A am Ausgang). Aus einer nachfolgenden logischen EXCLUSIV-ODER-Verknüpfung 11 von CMI-Signal und dem abgetakteten Signal A entsteht eine binäre Signalfolge PD, deren Pulsweiten direkt proportional der Phasenlage der positiven Taktflanke von T in Relation zur Bitmitte (180° bezogen auf die Taktperiode T) des CMI-Signals ist (vgl. Figur 3).

Das Ausgangssignal A des D-FF 10 wird zum einen dem Decodierer 1 und zum anderen dem Schaltungsteil Referenzerzeugung 6 zugeführt. Hier wird es mit der negativen Flanke des Taktes T von einem D-FF 12 (D-Flip-Flop) übernommen (Signal am Ausgang A_T), wodurch es eine zeitliche Verschiebung zum Signal A von genau einer halben Taktperiode T (180°) erfährt, was der optimalen Abtastphase des CMI-Signals entspricht. Über eine logische Exklusiv-ODER-Verknüpfung 13 - sie ist gleich aufgebaut wie die im Phasendifferenzbilder 5 - der Signale A und A_T entsteht eine binäre Signalfolge REF, deren Pulsweiten entsprechend der idealen Abtastphase einen Bezugswert für die des Signals PD darstellen. Außerdem enthält die Signalfolge REF abhängig vom Signalinhalt des CMI-codierten Signals (z.B. Dauer 0 oder Dauer 1) die gleiche Anzahl an Pulsen wie das Signal PD.

Figur 3 zeigt ein Zeitdiagramm der Phasendetektorsignale für den eingerasteten Zustand der Taktrückgewinnungsregelschleife.

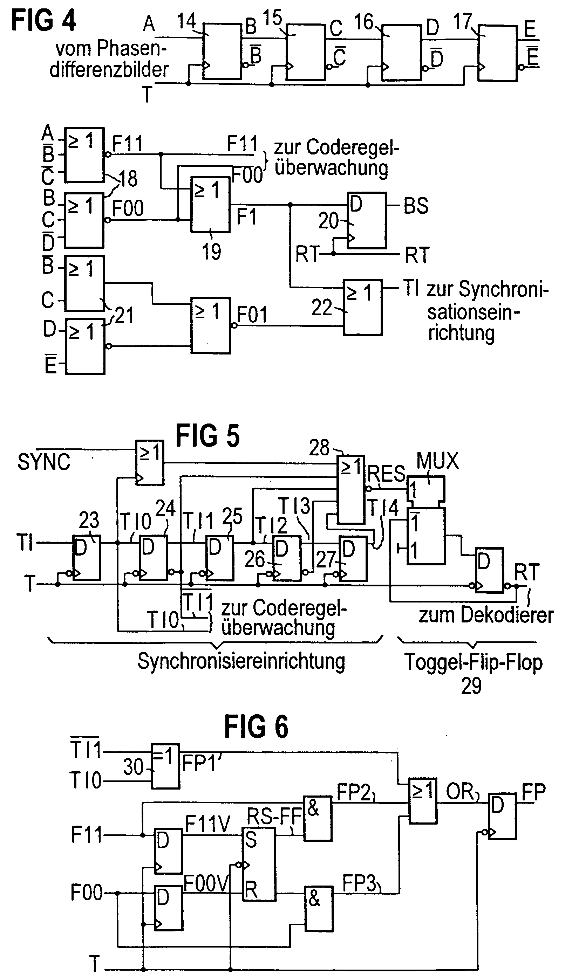

Das im Phasendetektor 4 durch die Abtastung des CMI-Signals mit dem geregelten Takt T erzeugte Signal A wird im Decodierer nach Figur 4 weiterverarbeitet. Dieser besteht aus vier D-FF's 14...17 und einer Decodierlogik 18 für die CMI-Bitpaare 11 (Signal F11) und 00 (Signal F00), die nach Durchlauf eines ODER-Gatters 19 die Folge F1 und mit dem rückgewonnenen Takt RT (entspricht T/2) abgetaktet am Ausgang eines weiteren D-FF 20 das Binärsignal BS ergeben, und aus einer weiteren Decodierlogik 21 für das CMI-Bitpaar 01 (Signal F01). Die Signale F11 und F00 werden auch als Eingangssignale im Schaltungsteil Coderegelüberwachung 2 und die Signale F1 und F01, logisch-ODER-verknüpft im ODER-Glied 22 zum Signal Taktinformation TI als Eingangssignal der Synchronisiereinrichtung 3 verwendet.

Die in Figur 5 dargestellte Synchronisiereinrichtung 3 besteht aus fünf in Serie geschalteten D-FF's 23...27, deren Ausgänge, in Wechsel Q und $\overline{Q}$, über ein NOR-Glied 28 zu einem Resetsignal RES für ein nachfolgendes Toggel-FF 29 logisch verknüpft werden. Mit dem Toggel-FF 29 wird mit dem auf das CMI-Eingangssignal synchronisierten Takt T der rückgewonnene Takt RT - er hat die halbe Frequenz des Taktes T - erzeugt und durch das Resetsignal in die zum Abtakten der Signalfolge F1 passende Phasenlage gesetzt. Die Verwendung von fünf D-FF ergibt eine gute Unempfindlichkeit gegenüber Störungen im CMI-Signal. Die Synchronisiereinrichtung 3 hat zusätzlich noch einen Eingang mit der Bezeichnung Sync (für synchron), über den eine Neusynchronisierung des Toggel-FF 29 verhindert werden kann. Dieser Eingang ist besonders dann sehr vorteilhaft, wenn gerahmte Signale z.B. Signale aus der Synchronen Digitalen Hierarchie SDH, CMI-codiert übertragen werden, da in diesem Fall die sehr störsichere Rahmenkennwort-Synchronisiereinrichtung für diese Signale zum Synchronisieren des Rahmentaktes RT genutzt werden kann und sich somit die Taktrückgewinnung äußerst robust gegenüber Störungen im CMI-Signal verhält. Zwei in der Synchronisiereinrichtung 3 am Ausgang der D-FF's 23, 24 vorhandene Signale TI0 und $\overline{TI1}$ werden in der Coderegelüberwachung 2 weiterverarbeitet.

In der in Figur 6 dargestellten Coderegelüberwachung 2 wird aus den Eingangssignalen TI0 und $\overline{TI1}$ von der Synchronisiereinrichtung 3 durch einen EX-OR-Vergleich im Element 30 ein Fehlerimpuls FP1 gewonnen, wenn die Taktinformation TI aus der Addition von CMI-Bitpaaren, die der binären 0 bzw. 1 entsprechen, aufgrund eines CMI-Codefehlers verfälscht ist.

Mit Hilfe der Signale F11 und F00 vom Decodierer 1 werden weitere Fehlerimpulse FP2 und FP3 erzeugt, wenn das Bildungsgesetz für die Umsetzung der binären 1 in abwechselnd positive oder negative CMI-Bitpaare nicht eingehalten ist. Eine ODER-Verknüpfung der Fehlerimpulse FP1, FP2 und FP3 in einem ODER-Glied 31 ergibt ein Fehlerpulssignal FP. Je nach Art der Störung im CMI-Signal kann die Anzahl der Fehlerimpulse FP größer oder kleiner als die tatsächliche Anzahl der CMI-Signalverfälschungen sein.

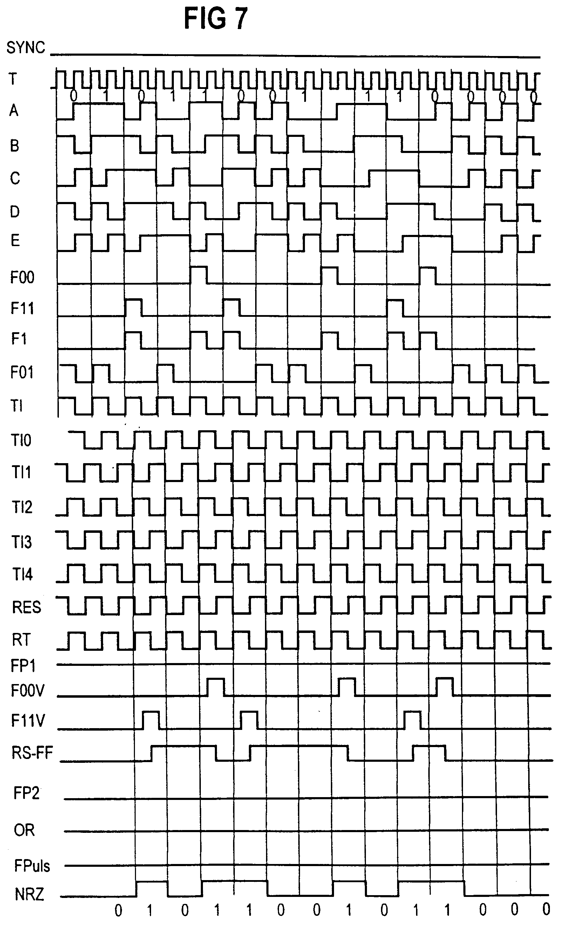

Figur 7 zeigt ein Pulsdiagramm, anhand dessen die Funktion der Schaltungen Decodierer, Synchronisiereinrichtung mit Toggel-FF und Coderegelüberwachung nachvollziehbar ist. Es ist jeweils der Verlauf der in den einzelnen Schaltungsteilen auftretenden Pulse und Signale aufgezeichnet.

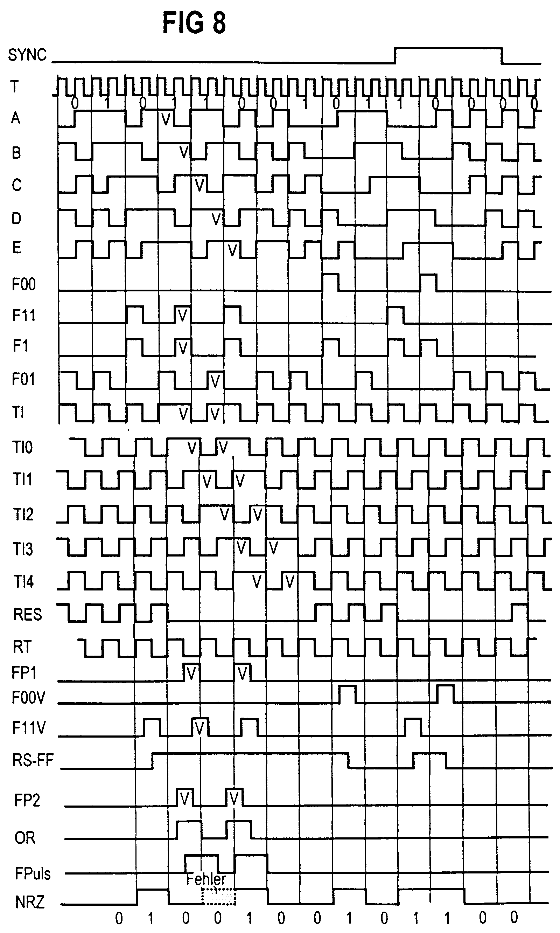

Figur 8 zeigt ein ähnliches Pulsdiagramm wie Figur 7. Hier wird ein Beispiel dafür gegeben, wie sich die beschriebenen Schaltungen im Fall einer CMI-Signalverletzung verhalten. Die betreffenden Stellen sind hierbei mit einem v gekennzeichnet.

**Patentansprüche**

1.  Schaltungsanordnung zur Rückgewinnung des Taktes aus einem CMI-codierten Signal,
    **gekennzeichnet durch**
    einen CMI-Decodierer (1) mit Coderegelüberwachung (2) und eine Phasenregelschleife aus einem, einen Phasendifferenzbilder (5) und eine Referenzerzeugung (6) enthaltenden Phasendetektor (4), einem dem Phasendetektor (4) ausgangsseitig angeschalteten Loop-Filter (7) und einem den auf das CMI-Eingangssignal synchronisierten Takt liefernden spannungsgesteuerten Oszillator VCO (9), dessen Regelspannungseingang mit dem Filterausgang verbunden ist.

2.  Schaltungsanordnung nach Anspruch 1,
    **dadurch gekennzeichnet,**
    daß in der Referenzerzeugung ein Referenzsignal aus dem abgetakteten, von der Abtastphase unabhängigen CMI-Signal so abgeleitet wird, daß es bezuglich der Gleichspannungsmittelwertschwankung in Abhängigkeit vom Bitmuster exakt die gleichen Eigenschaften aufweist wie das Signal am Ausgang des Phasendifferenzbilders (5).

3. Schaltungsanordnung nach Anspruch 2,
**dadurch gekennzeichnet,**
daß die Signalausgange von Phasendifferenzbilder (5) und Referenzerzeugung (6) zur Bildung der Spannungsdifferenz ihrer Ausgangssignale an ein Subtraktionsglied (8) angeschlossen sind.

4. Schaltungsanordnung nach einem der Ansprüche 1 bis 3,
**dadurch gekennzeichnet,**
daß im Phasendifferenzbilder (5) das CMI-Signal mit der positiven Taktflanke des vom VCO (9) gelieferten Taktes von einem D-Flip-Flop (10) übernommen wird, dessen Ausgangssignal A zum einen in einer logischen Exklusiv-ODER-Verknüpfung (11) mit dem CMI-Signal verknüpft wird unter Entstehung einer binären Signalfolge PD und zum anderen dem Decodierer (1) und der Referenzerzeugung (6) zugeführt wird.

5. Schaltungsanordnung nach Anspruch 4,
**dadurch gekennzeichnet,**
daß das Ausgangssignal A des D-Flip-Flop (10) des Phasendifferenzbilders (5) in der Referenzerzeugung (6) zum einen mit der negativen Flanke des Taktes T von einem weiteren D-Flip-Flop (12) übernommen wird (Signal A_T) und zum anderen in einer logischen Exklusiv-ODER-Verknüpfung (13) mit dem Ausgangssignal (A_T) des weiteren D-Flip-Flop (12) verknüpft wird unter Entstehung einer binären Signalfolge REF.

6. Schaltungsanordnung nach Anspruch 4 oder 5,
**dadurch gekennzeichnet,**
daß der Decodierer (1) aus z.B. vier D-Flip-Flops (14..17) und einer Decodierlogik (18) für die CMI-Bitpaare 11 (Signal F11) und 00 (Signal F00) besteht, die nach einem ODER-Gatter (19) eine Folge F1 und, mit einem rückgewonnenen Takt RT abgetaktet, am Ausgang eines dritten D-Flip-Flop (20) ein Binärsignal BS ergeben, und aus einer weiteren Decodierlogik (21) für das CMI-Bitpaar 01 (Signal F01).

7. Schaltungsanordnung nach Anspruch 6,
**dadurch gekennzeichnet,**
daß die Signale F11 und F00 der CMI-Bitpaare 11 und 00 zugleich als Eingangssignal der Coderegelüberwachung (2) zugeführt werden.

8. Schaltungsanordung nach Anspruch 6,
**dadurch gekennzeichnet,**
daß die Signale F1 und F01 am Ausgang des ODER-Gatters (19) bzw. des dritten D-Flip-Flop (20), nach logischer ODER-Verknüpfung (22) zu einer Signal Taktinformation TI, als Eingangssignal einer Synchronisiereinrichtung (3) zugeführt werden.

9. Schaltungsanordnung nach Anspruch 8,
**dadurch gekennzeichnet,**
daß die Synchronisiereinrichtung (3) aus z.B. fünf in Reihe geschalteten D-Flip-Flops (23...27) besteht, deren Ausgänge über ein NOR-Glied (28) zu einem Resetsignal RES für ein nachfolgendes Toggel-Flip-Flop (29) logisch verknüpft werden.

10. Schaltungsanordnung nach Anspruch 9,
**dadurch gekennzeichnet,**
daß mit dem Toggel-Flip-Flop (29) mit dem auf das CMI-Eingangssignal synchronisierten Takt T der rückgewonnene Takt RT mit der halben Frequenz des Taktes T erzeugt und durch das Resetsignal RES in die zum Abtakten der Signalfolge F1 passende Phasenlage gesetzt wird.

11. Schaltungsanordnung nach einem der Ansprüche 8 bis 10,
**dadurch gekennzeichnet,**
daß die Synchronisiereinrichtung (3) einen zusätzlichen Sync-Eingang aufweist.

12. Schaltungsanordnung nach einem der Ansprüche 8 bis 10,
**dadurch gekennzeichnet,**
daß zwei in der Synchronisiereinrichtung (3) vorhandene Signale TI0 und $\overline{TI1}$ in der Coderegelüberwa-chung (2) weiterverarbeitet werden.

13. Schaltungsanordnung nach Anspruch 12,
**dadurch gekennzeichnet,**
daß in der Coderegelüberwachung (2) aus den beiden Eingangssignalen TI0 und $\overline{TI1}$ von der Synchro-nisiereinrichtung (3) durch einen EXOR-Vergleich (30) ein Fehlerimpuls FP1 gewonnen wird, wenn die aus der Addition von CMI-Bitpaaren gewonnene Taktinformation TI aufgrund eines CMI-Codefehlers verfälscht ist.

14. Schaltungsanordnung nach Anspruch 13,
**dadurch gekennzeichnet,**
daß mit Hilfe der Signale F11 und F00 vom Decodierer (1) weitere Fehlerimpulse FP2 bzw. FP3 erzeugt werden bei Nichteinhaltung des Bildungsgesetzes für die Umsetzung der binären 1 in abwechselnd positive oder negative CMI-Bitpaare.

15. Schaltungsanordnung nach Anspruch 14,
**dadurch gekennzeichnet,**
daß eine ODER-Verknüpfung aller Fehlerimpulse FP1, FP2, FP3 ein Fehlerpulssignal FP ergibt.

# FIG 1

## FIG 2

Phasendetektor

Phasendifferenzbilder

A

zum
Dekodierer

CMI

D | A

=1 | PD

10

11

4

5

REF

A_T | =1

D

13

T

12

Referenzerzeugung

6

## FIG 3

T

BIN | 0 | 1 | 0 | 1 | 1 | 0 | 0 | 1

CMI

A

PD

A_T

REF

# FIG 4

A  14    B  15    C  16    D  17    E
vom Phasendifferenzbilder                              $\overline{B}$      $\overline{C}$      $\overline{D}$      $\overline{E}$
T

A
$\overline{B}$   ≥ 1   F11                    F11   zur Coderegel-
$\overline{C}$                                      überwachung
       18              ≥ 1   F00
B
C   ≥ 1   F00              F1              D   BS
$\overline{D}$              19        20
                                        RT        RT
$\overline{B}$   ≥ 1
C              21
D   ≥ 1        ≥ 1   F01        22   ≥ 1   TI zur Synchroni-
$\overline{E}$                                        sationsein-
                                                  richtung

# FIG 5

SYNC   ≥ 1              28   ≥ 1   RES   MUX
                                        1
              T I0  24   T I1  25   T I2   T I3        $\overline{1}$
       23                              T I4           1
TI   D        D        D        D        D
T                      26        27              H   1        D   RT

              T I1   zur Coderegel-              zum Dekodierer
       T I0         überwachung

       Synchronisiereinrichtung        Toggel-Flip-Flop
                                              29

# FIG 6

$\overline{T I1}$              =1   FP1'
       30
T I0

                                        ≥ 1   OR   D   FP
                              FP2
F11   D   F11V   RS-FF   &
                    S
F00   D   F00V   R        &   FP3

T

# FIG 7

# FIG 8